(19) Europäisches Patentamt
European Patent Office
Office européen des brevets

(11) **EP 3 561 905 B1**

(12) **EUROPÄISCHE PATENTSCHRIFT**

(45) Veröffentlichungstag und Bekanntmachung des Hinweises auf die Patenterteilung:
**11.05.2022 Patentblatt 2022/19**

(21) Anmeldenummer: **19163196.9**

(22) Anmeldetag: **15.03.2019**

(51) Internationale Patentklassifikation (IPC):
**H01M 50/411** (2021.01)    **H01M 50/431** (2021.01)
**H01M 50/46** (2021.01)    **H01M 50/449** (2021.01)

(52) Gemeinsame Patentklassifikation (CPC):
**H01M 50/46; H01M 50/417; H01M 50/434;**
**H01M 50/451;** Y02E 60/10; Y02P 70/50

(54) **VERFAHREN ZUR HERSTELLUNG EINES BATTERIEELEMENTES FÜR EINE BATTERIEZELLE SOWIE VERWENDUNG**

METHOD FOR THE PREPARATION OF A BATTERY ELEMENT FOR A BATTERY CELL AND USE

PROCÉDÉ DE FABRICATION D'UN ÉLÉMENT DE BATTERIE POUR UNE CELLULE DE BATTERIE AINSI QU'UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.04.2018 DE 102018206036**

(43) Veröffentlichungstag der Anmeldung:
**30.10.2019 Patentblatt 2019/44**

(73) Patentinhaber: **Robert Bosch GmbH**
**70442 Stuttgart (DE)**

(72) Erfinder:
• **Proell, Johannes**
**96052 Bamberg (DE)**
• **Postler, Florian**
**96163 Gundelsheim (DE)**

(56) Entgegenhaltungen:
**EP-A1- 2 804 240**    **DE-A1-102016 218 490**
**JP-A- 2015 153 579**

**Beschreibung**

Technisches Gebiet

Die Erfindung bezieht sich auf ein Verfahren zur Herstellung eines Batterieelementes für eine Batteriezelle zur Verwendung in einem Fahrzeug.

Stand der Technik

JP 2016-038995 A bezieht sich auf eine Energiespeichervorrichtung und ein Verfahren zur deren Herstellung. Gemäß dieser Lösung wird eine Energiespeichereinrichtung vorgeschlagen, in der eine Elektrode in Bezug auf einen Separator positioniert wird und nicht korrekt positionierte Elektroden sehr einfach detektiert werden können. Ferner wird ein Verfahren zur Herstellung einer derartigen Energiespeichereinrichtung vorgeschlagen. Eine Energiespeichereinrichtung enthält innerhalb eines Elektrodenensembles eine positive Elektrode und eine negative Elektrode, die jeweils mit einem Separator beschichtet sind und zwischen den Separatoren angeordnet sind. Jeweils ein Paar der Separatoren ist derart verschweißt, dass vier Ecken der positiven Elektrode in Sandwich-Bauweise mit vier Ecken zwischen einem Paar von Separatoren positioniert werden. DE 10 2016 218490 A1 offenbart Separatortaschen, die dadurch hergestellt werden, dass die Elektrode zwischen die Lagen eines gefalteten Separators gelegt werden. Der Separator enthält eine keramische Beschichtung. JP 2015 153579 A sowie EP 2 804 240 A1 offenbaren Separatortaschen, in dem eine Elektrode zwischen zwei mit Keramik beschichteten Separatorfolien beschichtet werden.

Batteriezellen für Fahrzeuge werden derzeit beispielsweise als zylinderförmige Anordnungen gewickelt. In Zukunft sollen derartige Lithiumionen-Batteriezellen in Stapelausführung nach einem Stacking-Verfahren aufgebaut werden. Mit der Stapelung derartiger Batteriezellen lässt sich vor allem eine höhere Volumennutzungsrate im Gegensatz zu gewickelten Batteriezellen erreichen. Ferner können dickere Elektrodenschichten eingesetzt werden im Vergleich zu Batteriezellen, die gewickelt sind. Des Weiteren sind die elektrochemische Leistung sowie die zyklische Alterung bei im Stapelverfahren hergestellten Batteriezellen deutlich besser.

Eine Batteriezelle wird in der Regel aus alternierenden Schichten von Anoden, Separatoren und Kathoden aufgebaut. Bei den Separatoren werden Materialien wie PE (Polyethylen) oder PP (Polypropylen) als Basisfilme eingesetzt, die einseitig oder auch beidseitig mit einer dünnen Keramikschicht aus $Al_2O_3$ oder Böhmit oder dergleichen beschichtet sein können. Während des Stapelprozesses zeigt immer eine Keramikseite zur Kathode des Batterieelements. Dadurch ist sichergestellt, dass die Kathode stets beidseitig von Keramik umgeben ist, wodurch die Stabilität insbesondere bei hohen auftretenden Batteriezellenspannungen verbessert wird. Im Falle eines doppelseitig beschichteten Separators ist auch die Anode beidseitig von Keramikschicht umgeben.

Zur Erhöhung der Stapelgeschwindigkeit, d.h. zur Beschleunigung der Batterieproduktion, aber auch aus funktionalen und sicherheitstechnischen Gründen kann es sinnvoll sein, die Kathode innerhalb einer Separatortasche unterzubringen.

Die Fertigung von Batteriezellen nach dem Stapelverfahren ist mit einigen technischen Herausforderungen verbunden. Diese gelten beispielsweise für den Fügeprozess im Wege eines stoffschlüssigen Fügeverfahrens, unbeschadet ob händisch oder maschinell produziert wird. Bei der Herstellung von Batteriezellen gemäß des Stapelverfahrens übersteigt die Breite der Anode in der Regel die der Kathode, während der Separator und die Anode in gleicher Breite ausgeführt werden. Daher besteht die Möglichkeit, dass das erste Elektrodenmaterial, aus dem die Kathode gefertigt wird, aus ihrer auf einem ersten Separator abgelegten Lageposition verrutschen kann. Des Weiteren wird das die Kathode darstellende erste Elektrodenmaterial innerhalb einer händischen oder auch maschinell ablaufenden Fertigung mit einer Toleranz auf dem ersten Separator abgelegt. Durch ein Verschieben bzw. ein Verrutschen des die Kathode darstellenden ersten Elektrodenmaterials aus der vordefinierten Lage, kann diese im Zuge eines sich anschließenden Fügeverfahrens, beispielsweise Ultraschallschweißen, beschädigt werden. So kann es beispielsweise zu einer Kollision zwischen Kathode und der eine stoffschlüssige Verbindung herstellenden Sonotrode kommen. Des Weiteren kann durch Verschieben bzw. Verrutschen des die Kathode darstellenden ersten Elektrodenmaterials aus der vordefinierten Lage eine minimal erforderliche Überlappung des die Anode darstellenden zweiten Elektrodenmaterials in Bezug auf das die Kathode darstellenden ersten Elektrodenmaterials unterschritten werden, was die elektrochemische Funktionalität der Batteriezelle erheblich beeinträchtigen kann. Der mit dem Stapelverfahren mögliche höhere Volumennutzungsgrad innerhalb einer Batteriezelle - verglichen mit gewickelt ausgeführten Batteriezellen - ist demzufolge mit fertigungstechnischen Problemen behaftet.

Darstellung der Erfindung

Erfindungsgemäß wird ein Verfahren zur Herstellung eines Batterieelementes für eine Batteriezelle mit nachfolgenden Verfahrensschritten vorgeschlagen:

    a) Aufbringen eines ersten Elektrodenmaterials auf einen mit einem Keramikmaterial beschichteten ersten Separator,
    b) Aufbringen eines mit dem Keramikmaterial beschichteten zweiten Separators auf die Anordnung gemäß Verfahrensschritt a),
    c) Erzeugen mindestens einer Fixierverbindung im Randbereich des ersten Elektrodenmaterials zwischen dem ersten und zweiten Separator und
    d) Erzeugen mindestens einer von der mindestens einen Fixierverbindung beabstandeten Hauptverbindung zwischen dem ersten und zweiten Separator und Bildung einer Tasche für das erste Elektrodenmaterial.

Der schlagende Vorteil des erfindungsgemäß vorgeschlagenen Verfahrens ist darin zu erblicken, dass das die Kathode beispielsweise bildende erste Elektrodenmaterial durch einen zweistufigen Fügeprozess innerhalb einer Tasche in ihrer Lage definiert positioniert wird. Der Abstand zur eigentlichen, später ausgeführten Hauptverbindung in Bezug auf die Kanten des ersten Elektrodenmaterials wird gleichmäßig gehalten. Durch Ausbildung der eigentlichen Hauptverbindung, die in einer zweiten Stufe nach der Fixierverbindung erzeugt wird, garantiert die zur Erfüllung der Zellfunktionalität notwendige und maximal erlaubte Verschiebung des die Kathode bildenden ersten Elektrodenmaterials aus einer Sollpositon bzw. Solllage.

In Weiterbildung des erfindungsgemäß vorgeschlagenen Verfahrens werden die Verfahrensschritte c) und d) mittels eines stoffschlüssigen Fügeverfahrens, insbesondere durch Ultraschallschweißen erzeugt. In Weiterbildung des erfindungsgemäß vorgeschlagenen Verfahrens werden nach der Durchführung der Verfahrensschritte a) bis d) ein zweites Elektrodenmaterial für die Anode auf die zuvor erzeugte Tasche aufgebracht und ein 4-er Paket - zur Stapelung geeignet - erzeugt.

Bei der gemäß Verfahrensschritt c) erzeugten mindestens einen Fixierverbindung handelt es sich um eine durchgängig ausgebildete Ultraschallschweißnaht, die in Halbkreisform oder in L-Form aufgebracht werden kann. Ferner sind Punkte oder Punktgeometrien oder auch oszillierende Wobbelgeometrien als Ausführungsformen der mindestens einen Fixierverbindung denkbar.

Bei der gemäß Verfahrensschritt d) erzeugten mindestens einen Hauptverbindung kann es sich ebenfalls um eine mittels des Ultraschallschweißverfahrens erzeugte Naht handeln, die als durchgängige kontinuierliche Hauptverbindung ausgebildet sein kann, als Linie oder in oszillierender Wobbelbewegung, oder als gepunktete oder anderweitig unterbrochene Hauptverbindung ausgeführt werden kann. Während sich die mindestens eine Hauptverbindung entlang der Kanten des ersten Elektrodenmaterials erstreckt, befindet sich die mindestens eine Fixierverbindung in Halbkreisform oder in L-Form ausgebildet, jeweils im Eckbereich des ersten Elektrodenmaterials, welches die Kathode darstellt.

Bei dem ersten Separator und/oder dem zweiten Separator, der zur Bildung der Tasche Verwendung findet, handelt es sich um ein ein- oder beidseitig mit einem Keramikmaterial beschichtetes Material. Im einfachsten Falle könnte auch ein unbeschichteter Separator aus einem Polymer eingesetzt werden. Bei der Keramikschicht kann es sich um eine Keramik wie beispielsweise $Al_2O_3$ oder auch Böhmit handeln. Wird die mindestens eine Fixierverbindung im Wege des Ultraschallschweißverfahrens hergestellt, so findet insbesondere eine erste Sonotrode Verwendung, deren Kopf einen Durchmesser zwischen 1 mm und 2 mm aufweist, wobei die erzeugte mindestens eine Fixierverbindung eine Breite zwischen 0,1 mm und 0,3 mm aufweist. Die mindestens eine Fixierverbindung wird bevorzugt in Halbkreisform oder in L-Form im Eckbereich des ersten Elektrodenmaterials liegend ausgeführt und fixiert dieses auf der Oberseite des ersten Separators.

Demgegenüber wird dem erfindungsgemäß vorgeschlagenen Verfahren folgend gemäß Verfahrensschritt d) mindestens eine Hauptverbindung mit einer zweiten Sonotrode erzeugt. Deren Kopf weist einen Durchmesser zwischen 4 mm und 8 mm auf und bildet die mindestens eine Hauptverbindung in einer Breite aus, die zwischen 0,3 mm und 1,2 mm liegt. Dem erfindungsgemäß vorgeschlagenen Verfahren zur Herstellung eines Batterieelementes weiter folgend, entspricht ein Abstand zwischen einer Innenkante der mindestens einen Fixierverbindung und der Kante des Elektrodenmaterials innerhalb der Tasche einer Differenz zwischen einem zweiten Maß und einem ersten Maß. Ein Abstand zwischen einer Innenkante der mindestens einen Hauptverbindung und der Kante des ersten Elektrodenmaterials innerhalb der Tasche entspricht einer Differenz zwischen einem dritten Maß und einem ersten Maß.

Darüber hinaus bezieht sich die Erfindung auf die Verwendung eines Batterieelementes, hergestellt gemäß des vorgeschlagenen Verfahrens in einer Traktionsbatterie eines Elektrofahrzeugs (EV = Electric Vehicle), eines Hybridfahrzeugs (HEV = Hybrid Electric Vehicle) oder eines PHEV eines Plug-in-Hybrid Electric Vehicle.

Vorteile der Erfindung

Die Vorteile der erfindungsgemäß vorgeschlagenen Lösung sind darin zu erblicken, dass das die Kathode darstellende erste Elektrodenmaterial durch einen zweistufigen Fügeprozess im Wege des Ultraschallschweißverfahrens innerhalb einer miteinander verbundenen Separatoren gebildeten Tasche in seiner Lage definiert vorpositioniert wird, bevor die eigentliche mindestens eine Hauptverbindung beabstandet von der mindestens einen Fixierverbindung hergestellt wird. Der Abstand zwischen der Hauptverbindung in Bezug auf die Kanten des ersten die Kathode darstellenden Elektrodenmaterials wird bei der erfindungsgemäß vorgeschlagenen Lösung durch die mindestens eine Fixierverbindung konstant gehalten. Die mindestens eine Hauptverbindung, ausgeführt als Ultraschallschweißnaht, garantiert die zur Erfüllung der Batteriezellenfunktionalität notwendige maximale erlaubte Verschiebung des die Kathode darstellenden ersten Elektrodenmaterials aus seiner Solllage auf dem ersten, vorzugsweise bahnförmig ausgebildeten Separator. Durch die Fixierung der Position des ersten Elektrodenmaterials, welches die Kathode darstellt, mit der mindestens einen Fixierungsverbindung, verbleibt das erste Elektrodenmaterial bei der Herstellung des Batterieelementes in seiner Ausgangsposition. Die Herstellung der mindestens einen Hauptverbindung, entweder als unterbrochene Verbindung, beispielsweise gepunktet oder als kontinuierliche Schweißnaht entlang der Kontur des ersten die Kathode darstellenden Elektrodenmaterials erfolgt derart, dass die mindestens eine Hauptverbindung weiter entfernt von den Kanten des ersten die Kathode darstellenden Elektrodenmateriales liegt als die mindestens eine Fixierungsnaht.

Die zunächst im Wege des Ultraschallschweißverfahrens hergestellte mindestens eine Fixierverbindung stellt eine dauerhafte Verbindung dar, die bereits einen Widerstand im Falle eines Schadens bietet, etwa das Auftreten einer exothermen Reaktion, zum Beispiel durch Überhitzen infolge einer mechanischen Beschädigung. Dabei kann es im ungünstigsten Falle zum Zurückziehen des Separators kommen, wodurch die Kathode in elektrischen Kontakt mit der Anode treten kann, was den Vorgang weiter beschleunigen würde. Mittels des Ultraschallschweißverfahrens hergestellte mindestens eine Fixierverbindung stellt bereits einen erheblichen Widerstand in einem solchen Falle dar.

Bei der Herstellung der eigentlichen Hauptverbindung erfolgt das Erzeugen einer Ultraschallschweißnaht, welche gleichzeitig die Begrenzung im Falle einer maximalen Verschiebung des die Kathode darstellenden ersten Elektrodenmaterials aus seiner Sollposition begrenzt. Dadurch kann in vorteilhafter Weise ein Überlappen zwischen Anode und Kathode reduziert werden, woraus sich wiederum ein höherer Volumennutzungsgrad für die Batteriezelle ergibt.

Zur Herstellung der mindestens einen Fixierungsnaht zwischen dem ersten Elektrodenmaterial der Kathode und dem ersten Separator wird beim Ultraschallschweißverfahren eine Stabsonotrode eingesetzt, deren Kopfdurchmesser zwischen 1 mm und 2 mm liegt. Aus diesem Grunde kann die Stabsonotrode sehr nahe an das erste Kathodenmaterial herangeführt werden, ohne diese zu beschädigen. Dies wiederum bietet die Möglichkeit, die mindestens eine Fixierungsnaht sehr nahe an der Kante des ersten Elektrodenmaterials auszubilden und eine sehr dünne, mindestens eine Fixierverbindung darstellende Nahtbreite zu erzielen. Diese ist jedoch ausreichend zur Lagefixierung des ersten die Kathode darstellenden Elektrodenmaterials für den weiteren Verarbeitungsprozess. Das Ultraschallschweißverfahren kann auch für doppelseitig beschichtete Separatoren eingesetzt werden. Da das die Kathode darstellende erste Elektrodenmaterial nunmehr innerhalb zweier Separatoren fixiert ist, verringert sich die Gefahr, dass die später eingesetzte zweite Sonotrode zur Erzeugung der mindestens einen Hauptverbindung mit dem ersten, die Kathode darstellenden Elektrodenmaterial kollidiert. Dieses kann nunmehr noch präziser in seiner Position gehalten werden, was die Robustheit des Herstellungsverfahrens erhöht. Sowohl die mindestens eine Fixierverbindung als auch die mindestens eine Hauptverbindung stellen Fügeverbindungen zwischen den Separatoren dar, das die Kathode darstellende erste Elektrodenmaterial liegt innerhalb der ausgebildeten Tasche.

Für die Erzeugung der mindestens einen Hauptverbindung zwischen dem ersten und dem zweiten Separator einerseits und der Ausbildung einer Tasche für das erste die Kathode darstellende Elektrodenmaterial anderseits, wird eine zweite Sonotrode, insbesondere eine Stabsonotrode eingesetzt, die einen Kopfdurchmesser zwischen 4 mm und 8 mm aufweist. Durch diese wird mindestens eine als Ultraschallschweißnaht ausgeführte Hauptverbindung in einer Breite erzeugt, die zwischen 0,3 mm und 1,2 mm liegen kann. Somit wird eine hinreichende Breite erzeugt. Diese bietet einen ausreichenden Widerstand gegen Schwund des Separators im Falle des Auftreten eines Nail-Penetration-Falles, ausreichend Widerstand gegen von außen in die erzeugte Tasche eindringende metallische oder leitfähige Partikel, die Kurzschlüsse erzeugen können. Die mindestens eine Hauptverbindung kann sowohl kontinuierlich als auch unterbrochen, beispielsweise gepunktet ausgeführt werden, wobei die mindestens eine Fixierungsnaht kontinuierlich ausgeführt wird, da im Vergleich zur mindestens einen Hauptverbindung die Länge der mindestens einen Fixierverbindung relativ gering ist.

In vorteilhafter Weise wird bei der Herstellung der Tasche für das erste, die Kathode darstellende Elektrodenmaterial der Abstand zwischen der Innenkante der mindestens einen Fixierungskante in Bezug auf die Außenkante des ersten die Kathode darstellenden Kathodenmaterials so gewählt, dass sich eine hochpräzise Kathodenfixierung innerhalb der Separatortasche einstellt.

Wird dieser Abstand minimiert, lässt sich die Überlappung zwischen dem die Kathode darstellenden ersten Elektrodenmaterial sowie dem zweiten, die Anode darstellenden zweiten Elektrodenmaterial reduzieren, so dass der Volumennutzungsgrad steigt. Des Weiteren ergibt sich der Abstand zwischen der Innenkante der mindestens einen Hauptverbindung in Bezug auf die Außenkante des die Kathode darstellenden ersten Elektrodenmaterials derart, dass maximales zulässiges Spiel des ersten Elektrodenmaterials in der hergestellten Tasche vorliegt, für den Fall, dass die mindestens eine Fixierungsverbindung versagen sollte.

Durch das erfindungsgemäß vorgeschlagene Verfahren lässt sich ein Verschieben bzw. Verrutschen des ersten die Kathode darstellenden Elektrodenmaterials während der Erzeugung der mindestens einen Hauptverbindung vermeiden. Dadurch wird der Ausschuss infolge einer Kollision zwischen Sonotrode und Elektrodenmaterial erheblich reduziert. Die mindestens eine bevorzugt im Wege des Ultraschallschweißverfahrens erzeugte Hauptverbindung dient als Begrenzung für eine maximal zulässige Verschiebung des die Kathode darstellenden ersten Elektrodenmaterials für den Fall, dass die mindestens eine Fixierungsverbindung versagt.

Wird das erste, die Kathode bildende Elektrodenmaterial wie erfindungsgemäß vorgeschlagen, auf dem ersten Separator fixiert, wird die lange Toleranzkette, die bisher bei Stapelprozessen aufgetreten ist, verkürzt, da die Kathodenposition durch die vorgeschlagene Fixierung sehr genau ist und unabhängig von der später erzeugten, mindestens einen Hauptverbindung ist. Der Prozess der Erzeugung der mindestens einen Hauptverbindung als Ultraschallschweißnaht kann robuster gestaltet werden. Durch das erfindungsgemäß vorgeschlagene Herstellungsverfahren kann die Erzeugung der mindestens einen Hauptverbindung aus der Toleranzkette herausgelöst werden, da das die Kathode darstellende erste Elektrodenmaterial durch die Vorfixierung in seiner definierten Position zwischen den Separatoren verbleibt.

Durch das erfindungsgemäß vorgeschlagene Verfahren kann insbesondere eine Verdrehung des die Kathode darstellenden ersten Elektrodenmaterials vermieden werden. Dadurch wiederum lassen sich elektrochemische Degradationsmechanismen wie Lithium-Plating und Elektrolytalterung in den Poren aufgrund inhomogener Stromdichten, insbesondere in den durch die Verdrehung des ersten die Kathode darstellenden Elektrodenmaterials betroffenen Randbereichen der Anode sowie der Kathodenecken selbst, erheblich reduzieren. Durch eine Verdrehung der Kathode würde der Abstand zum zweiten die Anode darstellenden Elektrodenmaterial reduziert.

Kurze Beschreibung der Zeichnung

Anhand der Zeichnung wir die Erfindung nachstehend eingehender beschrieben.

Es zeigt:

Figur 1    ein Batterieelement, dessen Separatoren jeweils einseitig mit einem Keramikmaterial beschichtet sind,

Figur 2    ein Batterieelement mit einem ersten Separator und einem zweiten Separator, die jeweils beidseitig mit dem Keramikmaterial beschichtet sind,

Figur 3    ein erstes Elektrodenmaterial aufgebracht einen einseitig beschichteten ersten Separator,

Figur 4    eine Schnittdarstellung eines Verbundes aus erstem Elektrodenmaterial, erstem Separator und zweitem Separator und Fixierungsverbindungen,

Figur 5    eine Draufsicht auf die in Figur 4 dargestellte Schnittanordnung,

Figur 5.1    eine Detaildarstellung einer Fixierungsverbindung,

Figur 6    eine Schnittdarstellung durch eine aus erstem und zweitem Separator und erstem Elektrodenmaterial erzeugte Tasche,

Figur 7    eine Draufsicht auf die in Figur 6 im Schnitt dargestellt Anordnung,

Figur 7.1    eine vergrößerte Darstellung des Randbereiches des ersten Elektrodenmaterials und

Figur 8    die Darstellung eines 4-er Paketes mit zweitem, die Anode bildendem Elektrodenmaterial.

Ausführungsvarianten

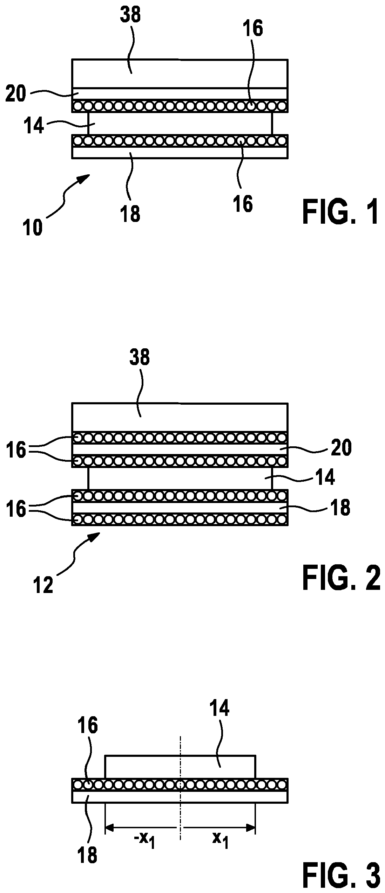

Der Darstellung gemäß Figur 1 ist ein Batterieelement 10 zu entnehmen, welches Separatoren 18, 20 umfasst, die einseitig mit einem Keramikmaterial 16 beschichtet sind.

Das Batterieelement 10 gemäß Figur 1 umfasst den ersten Separator 18 und den zweiten Separator 20. Die beiden Separatoren 18, 20 sind jedoch einseitig mit einem Keramikmaterial 16 beispielsweise $Al_2O_3$ oder Böhmit beschichtet. Die Separatoren 18, 20 sind so orientiert, dass das Keramikmaterial 16 einem ersten Elektrodenmaterial 14 zuweist, welches die Kathode darstellt. Oberhalb des zweiten Separators 20 befindet sich ein zweites Elektrodenmaterial 38, nämlich die Anode.

Figur 2 zeigt ein weiteres Batterieelement 12, welches ebenfalls den ersten Separator 18 und den zweiten Separator 20 umfasst, die jedoch in dieser Ausführungsvariante beidseitig mit dem Keramikmaterial 16 beschichtet sind. Die beidseitigen mit Keramikmaterial 16 beschichteten ersten und zweiten Separatoren 18, 20 nehmen zwischen sich das erste die Kathode darstellende Elektrodenmaterial 14 auf. Oberhalb des zweiten Separators 20 ist das zweite Elektrodenmaterial 38 angeordnet, welches die Anode darstellt.

Figur 3 zeigt einen ersten Separator 18, der einseitig mit dem Keramikmaterial 16 beschichtet ist. Oberhalb des Keramikmaterials 16 befindet sich das erste, die Kathode darstellenden Elektrodenmaterial 14. $X_1$ beziehungsweise - $x_1$ bezeichnen ein erstes Maß, welches die Breite des ersten Elektrodenmaterials 14 darstellt und in Bezug auf die in Figur 3 dargestellte Mittellinie als dessen Sollposition definiert wird.

Es gilt:

$$| - x_1 | = x_1 |$$

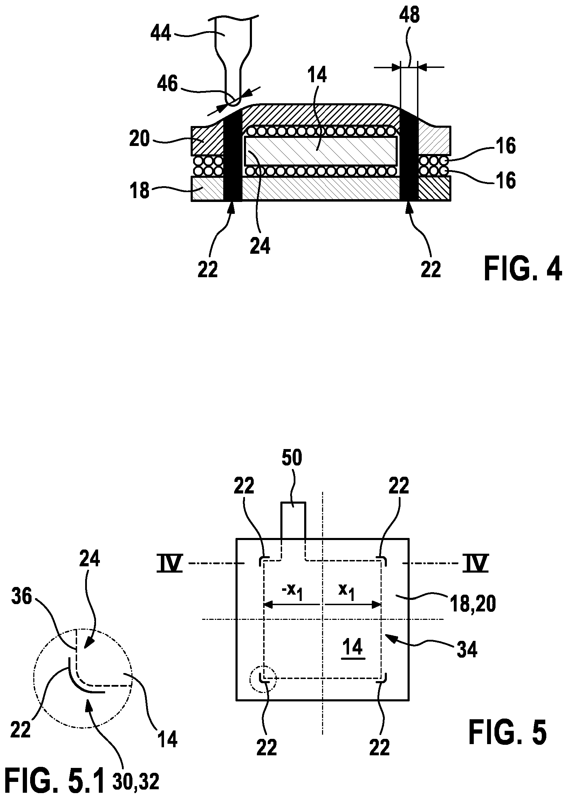

Figur 4 zeigt ein erstes die Kathode des Elektrodenmaterials 14 sowie jeweils einen Separator 18, 20 jeweils beschichtet mit Keramikmaterial 16 und durch Fixierverbindungen 22 miteinander verbunden.

Aus der Schnittdarstellung gemäß Figur 4 geht hervor, dass der erste Separator 18 auf seiner Oberseite das Keramikmaterial 16 aufnimmt und dem die Kathode bildenden ersten Elektrodenmaterial 14 hinzuweist. Der zweite Separator 20 überdeckt das die Kathode darstellende erste Elektrodenmaterial 14 mit der Schicht aus Keramikmaterial 16. Der erste Separator 18 und der zweite Separator 20 werden aus Kunststoffmaterial wie beispielsweise PE (Polyethylen) oder PP (Polypropylen) gefertigt. Aus der Darstellung gemäß Figur 4 geht hervor, dass die Fixierverbindungen 22 im Wesentlichen in vertikaler Richtung durch den in Figur 4 dargestellten Verbund verlaufen und mittels einer ersten Sonotrode 44 hergestellt werden. Ein Durchmesser 46 des Kopfes der ersten Sonotrode 44 beträgt zwischen 1 mm und 2 mm, eine Breite 48, in der die mindestens eine Fixierverbindung 22 als Ultraschallschweißnaht ausgeführt ist, liegt zwischen 0,1 mm und 0,3 mm. Aufgrund des geringen Durchmessers 46 der ersten Sonotrode 44 kann diese sehr nahe an das erste die Elektrode bildende Elektrodenmaterial 14 herangeführt werden, ohne dieses zu beschädigen. Wie aus Figur 4 hervorgeht, verläuft die mindestens eine Fixierverbindung 22 im Randbereich 24 des ersten Elektrodenmaterials 14 nahe einer Kante 36 des ersten Elektrodenmaterials 14. Die Breite 48 der mindestens einen Fixierverbindung 22 ist sehr dünn, jedoch ausreichend für die Lagefixierung des ersten Elektrodenmaterials 14 für weitere Verarbeitungsprozesse. Anstelle des in Figur 4 dargestellten, einseitig beschichteten Separators 18 bzw. 20 können auch doppelseitig beschichtete Separatoren 18 bzw. 20 gemäß der Darstellung in Figur 2 zum Einsatz kommen.

Aus der Darstellung gemäß Figur 4 geht hervor, dass das erste, die Kathode darstellende Elektrodenmaterial 14, nunmehr fixiert ist und somit die Gefahr verringert ist, dass eine später zum Einsatz kommende zweite Sonotrode 52 zur Ausbildung der mindestens einen Hauptverbindung 26 mit dem ersten Elektrodenmaterial 14 kollidiert und dieses beschädigen können. Das erste, die Kathode darstellende Elektronenmaterials 14, ist nun noch präziser hinsichtlich seiner Lage definiert als lediglich über eine Hauptverbindung 26. Es tritt deutlich weniger Spiel auf.

Der Draufsicht gemäß Figur 5 ist der Schnittverlauf IV - IV zu entnehmen. Aus der Draufsicht gemäß Figur 5 geht hervor, dass die übereinanderliegenden ersten und zweiten Separatoren 18, 20 das die Kathode darstellende, erste Elektrodenmaterial 14, vollständig überdecken. In gestrichelter Darstellung ist eine Kontur 34 des ersten Elektrodenmaterials 14 angedeutet. In den Eckbereichen des ersten Elektrodenmaterials 14 verlaufen die in der Schnittdarstellung gemäß 4 dargestellten Fixierverbindungen 22. Diese können, wie aus Figur 5.1 hervorgeht, in Halbkreisform 30 oder auch in L-Form ausgebildet sein. Die Fixierverbindungen 22 umgeben die Eckbereiche der Kanten 36 des ersten, die Kathode darstellenden Elektrodenmaterials 14. Mit Bezugszeichen 50 ist eine Kontaktfahne des ersten, die Kathode darstellenden Elektrodenmaterials 14 bezeichnet, welche seitlich über den Verbund aus erstem Separator 18, ersten Elektrodenmaterial 14 und zweiten Separator 20 hervorsteht und der späteren Kontaktierung des ersten Elektrodenmaterials 14 dient. Auch hier gilt, $| - x_1 | = | x_1 |$.

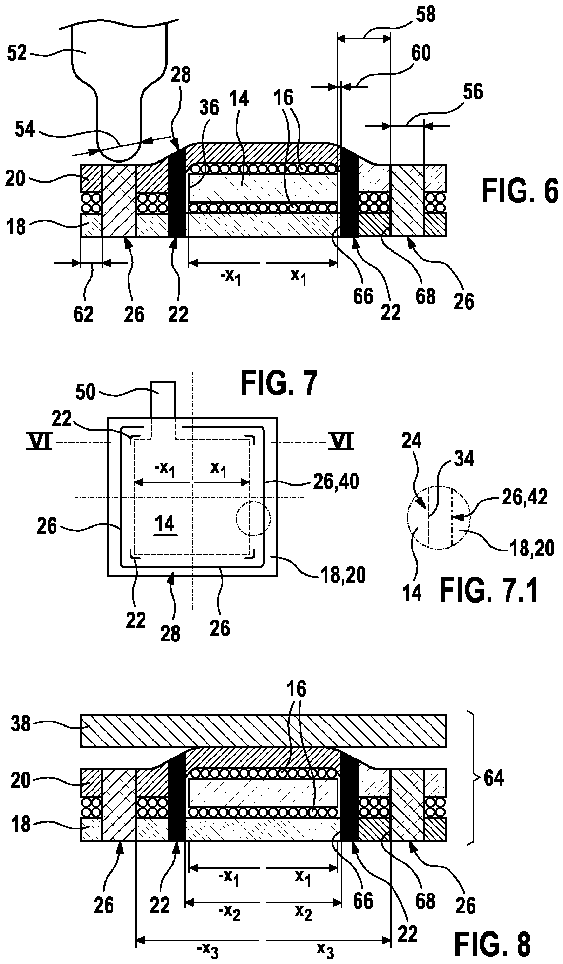

Der Darstellung gemäß Figur 6 ist die Ausbildung der Tasche 28 durch Herstellung der mindestens einen Hauptverbindung 26 im Wege des Ultraschallschweißverfahrens zu entnehmen.

Für die Herstellung der mindestens einen Hauptverbindung 26 wird eine zweite Sonotrode 52 eingesetzt, die insbesondere als Stabsonotrode ausgebildet ist. Die zweite Sonotrode 52 weist einen Durchmesser 54 am Kopf auf, der zwischen 4 mm und 8 mm liegt. Mittels der zweiten Sonotrode 52 wird die mindestens eine Hauptverbindung 26 erzeugt, deren Breite 56 zwischen 0,3 mm und 1,2 mm liegt. Die Breite 56 der mindestens einen Hauptverbindung 26 ist so gewählt, dass diese ausreichend breit ist und die für die Funktionalität des zu fertigenden Batterieelementes 10, 12 notwendigen Bedingungen erfüllt, so z.B. Widerstand gegen Separatorschrumpf und Widerstand gegen von außen in die Tasche 28 eindringende, metallisch leitfähige Partikel, die einen Kurzschluss erzeugen könnten. Die bevorzugt als Ultraschallschweißnaht ausgebildete Hauptverbindung 26 kann sowohl kontinuierlich als auch unterbrochen, so zum Beispiel gepunktet ausgeführt werden, während die mindestens eine Fixierverbindung 22 kontinuierlich ausgebildet wird, was mit der geringen Nahtlänge der mindestens einen Fixierverbindung 22 zusammenhängt, vgl. Draufsicht gemäß Figur 5.

Aus der Schnittdarstellung gemäß Figur 6 geht des Weiteren hervor, dass zwischen der Kante 36 des die Kathode darstellenden ersten Elektrodenmaterials 14 und einer Innenkante 66 der Fixierverbindung 22 ein zweiter Abstand 60 herrscht. Ein erster Abstand 58 bezeichnet die Distanz zwischen der Kante 36 des ersten die Kathode darstellenden Elektrodenmaterials 14 und einer Innenkante 68 der mindestens einen Hauptverbindung 26. Bezugszeichen 56 ist die Breite der mindestens einen, bevorzugt als Ultraschallschweißnaht hergestellten Hauptverbindung 26 bezeichnet.

Des Weiteren geht aus der Schnittdarstellung der Tasche 28 gemäß Figur 6 hervor, dass auf der Außenseite einer jeder Hauptverbindung 26 der erste Separator 18 und der zweite Separator 20 einen Überstand 62 aufweisen. Der Überstand 62 liegt in der Größenordnung zwischen 0 mm und 1 mm.

Figur 7 zeigt den Schnittverlauf VI - VI gemäß Figur 6.

Aus der Draufsicht gemäß Figur 7 geht hervor, dass das die Kathode darstellende erste Elektrodenmaterial 14 - dargestellt in seiner Sollposition $| x_1 = | - x_1 -$ vollständig von beiden Separatoren 18, 20, die jeweils eine Schicht aus Keramikmaterial 16 aufweisen, überdeckt ist, und somit in der Tasche 28 liegt. Eine Kontaktfahne 50 des ersten Elektrodenmaterials 14 steht seitlich über die miteinander verbundenen ersten und zweiten Separatoren 18, 20 über. Das erste, die Kathode darstellende Elektrodenmaterial 14 ist durch die in den Eckbereichen des ersten Elektrodenmaterials 14 ausgebildeten Fixierverbindungen 22 in seiner Position fixiert, wohingegen in der Darstellung gemäß Figur 7 die Hauptverbindungen 26 jeweils als durchgängige Ultraschallschweißnähte dargestellt sind. In der Detailzeichnung gemäß Figur 7.1 ist die mindestens eine Hauptverbindung 26 unterbrochen dargestellt. Die unterbrochene Hauptverbindung 42 könnte beispielsweise durch Punktschweißen oder kurzes Raupenschweißen ausgebildet werden. Aus der Detaildarstellung gemäß Figur 7.1 geht hervor, dass die unterbrochen ausgebildete Hauptverbindung 42 seitlich von der Kontur 34 des ersten Elektrodenmaterials 14 entfernt liegt. Bezugszeichen 24 markiert den Randbereich des ersten Elektrodenmaterials 14 - vergleiche Draufsicht gemäß Figur 7.

Figur 8 zeigt ein vollständig ausgebildetes ein Batterieelement 10 bzw. 12 darstellendes 4-er Paket 64.

Figur 8 zeigt, dass auf die Oberseite der Tasche 28 gemäß Figur 6 ein zweites Elektrodenmaterial 38, welches die Anode darstellt, abgelegt ist. Dadurch entsteht das in Figur 8 in der Schnittdarstellung dargestellte 4-er Paket 64, welches sich durch eine hochgenaue Positionierung auszeichnet und zum Stapeln besonders geeignet ist. Wie der Darstellung gemäß Figur 8 zu entnehmen ist, gelten für die Positionierung des ersten Elektrodenmaterials 14 bzw. die Lage der Innenkanten 66 der mindestens einen Fixierverbindung sowie die Positionierung der Innenkanten 68 der jeweiligen bevorzugt als Ultraschallschweißnähte ausgebildeten Hauptverbindungen 26 folgende Beziehungen:

$$x_2 - x_1 \text{ oder } x_3 - x_1$$

Sind die genannten Bedingungen hinsichtlich des ersten Maßes $x_1$, des zweiten Maßes $x_2$ und des dritten Maßes $x_3$ erfüllt, liegt ein hochpräzise gefertigtes 4-er Paket 64 vor, welches zum Aufbau einer Batteriezelle aus mehreren Batterieelementen 10 bzw. 12 eingesetzt werden kann.

Für den Abstand der Innenkante 66 der mindestens einen Fixierverbindung 22 zur Kante 36 des ersten Elektrodenmaterials 14 wird innerhalb der Separatortasche die Differenz zwischen dem zweiten Maß $x_2$ und dem ersten Maß $x_1$ gebildet. Der Abstand zwischen der Innenkante 68 der mindestens einen Hauptverbindung 26 zur Kante 36 des ersten, die Kathode darstellenden Elektrodenmaterials 14, dient der Begrenzung eines maximal zulässigen Spiels des ersten Elektrodenmaterials 14 in der Tasche 28 für den Fall, dass die mindestens eine Fixierungsnaht versagen sollte sowie zur Wahrung eines funktional nötigen und minimal erlaubten Überlapps zwischen dem ersten Elektrodenmaterial 14 und dem zweiten Elektrodenmaterial 38. Dieser Abstand ergibt sich aus der Differenz des dritten Maßes $x_3$ und des ersten Maßes $x_1$.

Durch das erfindungsgemäß vorgeschlagene Verfahren wird ein zweistufiger Ultraschallschweißverfahren dargestellt, der das die Kathode bildende erste Elektrodenmaterial 14 fixiert und die Bildung einer Tasche 28 zur Aufnahme des ersten Elektrodenmaterials 14 ermöglicht. Die Gefahr eines Verrutschens des die Kathode darstellenden ersten Elektrodenmaterials 14 wird erheblich verringert. Dadurch ist eine erhebliche Reduzierung des Ausschusses infolge von Kollisionen zwischen dem ersten Elektrodenmaterial 14 und der zweiten Sonotrode 52 erreichbar. Die mindestens eine Hauptverbindung 26 agiert darüber hinaus als Begrenzung für eine maximal zulässige Verschiebung des ersten Elektrodenmaterials 14 innerhalb der Tasche 28, für den Fall, dass die mindestens eine Fixierverbindung 22 versagen sollte. Die mindestens eine Hauptverbindung 26 hat aber hauptsächlich die funktionale Aufgabe, einen Widerstand gegen eine Separatorschrumpfung und eintretende, leitfähige metallische Partikel zu bilden. Die mindestens eine Fixierverbindung 22 ermöglicht eine präzise Positionierung des ersten, die Kathode darstellenden Elektrodenmaterials 14. Durch die Fixierung des die Kathode darstellenden ersten Elektrodenmaterials 14 wird ein erheblich präziserer und robuster Herstellungsprozess für Batterieelemente 10, 12 dargestellt. Die Tasche 28 kann in nachfolgenden Prozessen je nach Bedarf beschnitten oder weiterverarbeitet werden, um zum Beispiel den Volumennutzungsgrad einer zu fertigenden Batteriezelle durch Randbeschneidung der Tasche 28 noch weiter zur steigern. Dies ist möglich, da die Position des die Kathode bildenden ersten Elektrodenmaterials 14 durch die Fixierung über die mindestens eine Fixierverbindung 22 sehr genau erfolgen kann, und unabhängig von der in Bezug auf die mindestens eine Fixierverbindung 22 außen liegende eigentliche Hauptverbindung 26 ist. Deren Herstellung kann robuster gestaltet werden, da nunmehr sichergestellt ist, dass das die Kathode darstellende erste Elektrodenmaterial 14 während des Herstellungsprozesses der Tasche 28 durch die mindestens eine Fixierverbindung 22 in Position gehalten wird. Da aber die Herstellung der mindestens einen Hauptverbindung 26 im Ultraschallschweißverfahren robuster gestaltet werden kann, und unabhängig von der Herstellung der mindestens einen Fixierverbindung 22 ist, werden die Toleranzen vergrößert und der Prozess kann generell vereinfacht durchgeführt werden. Die Herstellung der mindestens einen Hauptverbindung 26 wird aus der Toleranzkette herausgelöst. Dadurch kann dementsprechend der komplette Herstellungsprozess vereinfacht werden, zudem werden höhere Standzeiten der eingesetzten ersten und zweiten Sonotroden 44 bzw. 52 erreicht.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

**Patentansprüche**

1. Verfahren zur Herstellung eines Batterieelementes (10, 12) einer Batteriezelle mit nachfolgenden Verfahrensschritten:

a) Aufbringen eines ersten Elektrodenmaterials (14) auf einen mit einem Keramikmaterial (16) beschichteten ersten Separator (18),

b) Aufbringen eines mit dem Keramikmaterial (16) beschichteten zweiten Separators (20) auf die Anordnung gemäß Verfahrensschritt a),

c) Erzeugen mindestens einer Fixierverbindung (22) im Randbereich (24) des ersten Elektrodenmaterials (14) zwischen dem ersten und zweiten Separator (18, 20) und

d) Erzeugen mindestens einer von der mindestens einen Fixierverbindung (22) beabstandeten Hauptverbindung (26) zwischen dem ersten und dem zweiten Separator (18, 20) und Bildung einer Tasche (28) für das erste Elektrodenmaterial (14).

2. Verfahren gemäß Anspruch 1, **dadurch gekennzeichnet, dass** die Verfahrensschritte c) und d) mittels eines stoffschlüssigen Fügeverfahrens, insbesondere durch das Ultraschallschweißverfahren durchgeführt werden.

3. Verfahren gemäß Anspruch 1, **dadurch gekennzeichnet, dass** nach Durchführung der Verfahrensschritte a) bis d) ein zweites Elektrodenmaterial (38) auf die Tasche (28) aufgebracht wird und ein 4-er Paket (64) zur Stapelung erzeugt wird.

4. Verfahren gemäß Anspruch 1, **dadurch gekennzeichnet, dass** die mindestens eine Fixierverbindung (22) in Halbkreisform (30) oder in L-Form (32), als Punkt oder Punktgeometrie ausgeführt wird.

5. Verfahren gemäß Anspruch 1, **dadurch gekennzeichnet, dass** die mindestens eine Hauptverbindung (26) als durchgängige Hauptverbindung (40) oder als unterbrochene Hauptverbindung (42) ausgeführt wird.

6. Verfahren gemäß Anspruch 1, **dadurch gekennzeichnet, dass** die mindestens eine Hauptverbindung (26) in einem ersten Abstand (58) von einer Kante (36) des ersten Elektrodenmaterials (14) liegt, der einen zweiten Abstand (60) zwischen der Kante (36) des ersten Elektrodenmaterials (14) und der mindestens einen Fixierverbindung (22) übersteigt.

7. Verfahren gemäß Anspruch 1, **dadurch gekennzeichnet, dass** der erste Separator (18) und/oder der zweite Separator (20) ein- oder beidseitig mit dem Keramikmaterial (16) beschichtet sind.

8. Verfahren gemäß Anspruch 1, **dadurch gekennzeichnet, dass** die mindestens eine Fixierverbindung (22) mit einer ersten Sonotrode (44) erzeugt wird, deren Kopf einen Durchmesser (46) zwischen 1 mm und 2 mm aufweist und eine Breite (48) der mindestens einen Fixierverbindung (22) zwischen 0,1 mm und 0,3 mm liegt.

9. Verfahren gemäß Anspruch 1, **dadurch gekennzeichnet, dass** die mindestens eine Hauptverbindung (26) mit einer zweiten Sonotrode (52) erzeugt wird, deren Kopf einen Durchmesser (54) aufweist, der zwischen 4 mm und 8 mm aufweist und eine Breite (56) der mindestens einen Hauptverbindung (26) zwischen 0,3 mm und 1,2 mm liegt.

10. Verfahren gemäß Anspruch 1, **dadurch gekennzeichnet, dass** ein Abstand zwischen einer Innenkante (66) der mindestens einen Fixierverbindung (22) und der Kante (36) des ersten Elektrodenmaterials (14) innerhalb der Tasche (28) einer Differenz zwischen einem zweiten Maß $x_2$ und einem ersten Maß $x_1$ entspricht.

11. Verfahren gemäß Anspruch 1, **dadurch gekennzeichnet, dass** ein Abstand zwischen einer Innenkante (68) der mindestens einen Hauptverbindung (26) und der Kante (36) des ersten Elektrodenmaterials (14) innerhalb der Tasche (28) einer Differenz zwischen einem dritten Maß $x_3$ und einem ersten Maß $x_1$ entspricht.

12. Verwendung eines Batterieelementes (10, 12) hergestellt gemäß es Verfahrens nach einem der Ansprüche 1 bis 11 in einer Traktionsbatterie eines Elektrofahrzeugs (EV = Electric Vehicle), eine Hybridfahrzeugs (HEV = Hybrid Electric Vehicle) oder eines PHEV (Plug-in-Hybrid Electric Vehicle)

**Claims**

1. Method for producing a battery element (10, 12) of a battery cell, comprising the following method steps:

a) applying a first electrode material (14) to a first separator (18) coated with a ceramic material (16),

b) applying a second separator (20) coated with the ceramic material (16) to the arrangement according to method step a),

c) producing at least one fixing connection (22) in the edge region (24) of the first electrode material (14) between the first and second separators (18, 20), and

d) producing at least one main connection (26), which is spaced apart from the at least one fixing connection (22), between the first and the second separator (18, 20) and forming a pocket (28) for the first electrode material (14).

**2.** Method according to Claim 1, **characterized in that** method steps c) and d) are carried out by means of an integral joining process, in particular by the ultrasonic welding process.

**3.** Method according to Claim 1, **characterized in that**, after carrying out method steps a) to d), a second electrode material (38) is applied to the pocket (28) and a 4-piece pack (64) is produced for stacking.

**4.** Method according to Claim 1, **characterized in that** the at least one fixing connection (22) is embodied in a semicircular shape (30) or in an L shape (32), as a point or point geometry.

**5.** Method according to Claim 1, **characterized in that** the at least one main connection (26) is embodied as a continuous main connection (40) or as an interrupted main connection (42).

**6.** Method according to Claim 1, **characterized in that** the at least one main connection (26) is situated at a first distance (58) from an edge (36) of the first electrode material (14), which first distance exceeds a second distance (60) between the edge (36) of the first electrode material (14) and the at least one fixing connection (22).

**7.** Method according to Claim 1, **characterized in that** the first separator (18) and/or the second separator (20) are/is coated with the ceramic material (16) on one or both sides.

**8.** Method according to Claim 1, **characterized in that** the at least one fixing connection (22) is produced with a first sonotrode (44), the head of which first sonotrode has a diameter (46) of between 1 mm and 2 mm and a width (48) of the at least one fixing connection (22) lies between 0.1 mm and 0.3 mm.

**9.** Method according to Claim 1, **characterized in that** the at least one main connection (26) is produced with a second sonotrode (52), the head of which second sonotrode has a diameter (54) between 4 mm and 8 mm, and a width (56) of the at least one main connection (26) lies between 0.3 mm and 1.2 mm.

**10.** Method according to Claim 1, **characterized in that** a distance between an inner edge (66) of the at least one fixing connection (22) and the edge (36) of the first electrode material (14) within the pocket (28) corresponds to a difference between a second extent $x_2$ and a first extent $x_1$.

**11.** Method according to Claim 1, **characterized in that** a distance between an inner edge (68) of the at least one main connection (26) and the edge (36) of the first electrode material (14) within the pocket (28) corresponds to a difference between a third extent $x_3$ and a first extent $x_1$.

**12.** Use of a battery element (10, 12) produced in line with the method according to one of Claims 1 to 11 in a traction battery of an electric vehicle (EV), a hybrid vehicle (HEV = Hybrid Electric Vehicle) or a PHEV (Plug-in Hybrid Electric Vehicle).

**Revendications**

**1.** Procédé de fabrication d'un élément de batterie (10, 12) d'une cellule de batterie, comprenant les étapes de procédé suivantes consistant à :

    a) déposer un premier matériau d'électrode (14) sur un premier séparateur (18) revêtu d'un matériau céramique (16),
    b) déposer un deuxième séparateur (20) revêtu du matériau céramique (16) sur l'agencement selon l'étape de procédé a),
    c) produire au moins un raccordement de fixage (22) dans la zone marginale (24) du premier matériau d'électrode (14) entre le premier et le deuxième séparateur (18, 20), et
    d) produire au moins un raccordement principal (26), espacé de l'au moins un raccordement de fixage (22), entre le premier et le deuxième séparateur (18, 20), et former une poche (28) pour le premier matériau d'électrode (14).

**2.** Procédé selon la revendication 1, **caractérisé en ce que** les étapes de procédé c) et d) sont effectuées au moyen d'un procédé d'assemblage par liaison de matière, en particulier par un procédé de soudage par ultrasons.

**3.** Procédé selon la revendication 1, **caractérisé en ce qu'**après l'exécution des étapes de procédé a) à d), un deuxième matériau d'électrode (38) est déposé sur la poche (28) et un paquet de 4 (64) est produit pour l'empilage.

**4.** Procédé selon la revendication 1, **caractérisé en ce que** ledit au moins un raccordement de fixage (22) est réalisé en forme de demi-cercle (30) ou en forme de L (32), sous forme de point ou de géométrie ponctuelle.

**5.** Procédé selon la revendication 1, **caractérisé en ce que** ledit au moins un raccordement principal (26) est réalisé sous forme de raccordement principal continu (40) ou de raccordement principal discontinu (42) .

**6.** Procédé selon la revendication 1, **caractérisé en ce que** ledit au moins un raccordement principal (26) se trouve à une première distance (58) d'un bord (36) du premier matériau d'électrode (14), qui dépasse une deuxième distance (60) entre le bord (36) du premier matériau d'électrode (14) et de l'au moins un raccordement de fixage (22).

7. Procédé selon la revendication 1, **caractérisé en ce que** le premier séparateur (18) et/ou le deuxième séparateur (20) sont revêtus du matériau céramique (16) d'un côté ou des deux côtés.

8. Procédé selon la revendication 1, **caractérisé en ce que** ledit au moins un raccordement de fixage (22) est produit par une première sonotrode (44) dont la tête présente un diamètre (46) entre 1 mm et 2 mm, et une largeur (48) de l'au moins un raccordement de fixage (22) est comprise entre 0,1 mm et 0,3 mm.

9. Procédé selon la revendication 1, **caractérisé en ce que** ledit au moins un raccordement principal (26) est produit par une deuxième sonotrode (52) dont la tête présente un diamètre (54) entre 4 mm et 8 mm, et une largeur (56) de l'au moins un raccordement principal (26) est comprise entre 0,3 mm et 1,2 mm.

10. Procédé selon la revendication 1, **caractérisé en ce qu'**une distance entre un bord intérieur (66) de l'au moins un raccordement de fixage (22) et le bord (36) du premier matériau d'électrode (14) à l'intérieur de la poche (28) correspond à une différence entre une deuxième dimension $x_2$ et une première dimension $x_1$.

11. Procédé selon la revendication 1, **caractérisé en ce qu'**une distance entre un bord intérieur (68) de l'au moins un raccordement principal (26) et le bord (36) du premier matériau d'électrode (14) à l'intérieur de la poche (28) correspond à une différence entre une troisième dimension $x_3$ et une première dimension $x_1$.

12. Utilisation d'un élément de batterie (10, 12) fabriqué selon le procédé selon l'une quelconque des revendications 1 à 11 dans une batterie de traction d'un véhicule électrique (EV = « Electric Vehicle »), d'un véhicule hybride (HEV = « Hybrid Electric Vehicle ») ou d'un véhicule électrique hybride rechargeable (PHEV = « Plug-in Hybrid Electric Vehicle »).

**FIG. 1**

**FIG. 2**

**FIG. 3**

FIG. 4

FIG. 5.1

FIG. 5

**FIG. 6**

**FIG. 7**

**FIG. 7.1**

**FIG. 8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2016038995 A
- DE 102016218490 A1
- JP 2015153579 A
- EP 2804240 A1